# EUROPEAN PATENT SPECIFICATION

(11) **EP 2 809 154 B1**
(45) Date of publication and mention of the grant of the patent: **16.08.2017**
(21) Application number: 13700748.0
(22) Date of filing: 21.01.2013
(51) Int. Cl.: A01N 25/00, A01N 43/22, A01N 49/00, A01N 51/00, A01N 55/10, A01N 57/14, A01N 63/00, A01P 7/04, A01N 25/02, A01N 25/04

(54) **ADJUVANT CONTAINING POLYORGANOSILOXANE AND ORGANIC SOLVENT FOR PREPARING A LARVICIDAL TANK MIX**
ADJUVANS MIT POLYORGANOSILOXAN UND ORGANISCHES LÖSUNGSMITTEL ZUR HERSTELLUNG EINER LARVIZIDEN TANKMISCHUNG
ADJUVANT COMPORTANT UN POLYORGANOSILOXANE ET UN SOLVANT ORGANIQUE POUR LA PRÉPARATION D'UN MÉLANGE LARVICIDE EN CUVE

(30) Priority: 30.01.2012 US 201261592009 P
(43) Date of publication of application: 10.12.2014
(73) Proprietor: BASF SE, 67056 Ludwigshafen am Rhein (DE)
(72) Inventor: TARANTA, Claude, 76297 Stutensee (DE); MÜLLER, Helmut, 67256 Weisenheim (DE); STUTZ, Susanne, 69469 Weinheim (DE); WEINMÜLLER, Egon, 67117 Limburgerhof (DE); AUSTIN, James, W., Wake Forest, NC 27587 (US)
(74) Representative: BASF IP Association
(86) International application number: PCT/EP2013/051033
(87) International publication number: WO 2013/113577

(56) References cited:
- WO-A1-85/02093
- WO-A1-2008/014566
- WO-A1-2012/104369
- WO-A2-2011/095991
- DE-A1- 19 917 948
- US-A- 4 155 995
- US-A1- 2005 244 357
- M. J. PERICH ET AL: "Field evaluation of four biorational larvicide formulations against Anopheles albimanus in Honduras", MEDICAL AND VETERINARY ENTOMOLOGY, vol. 4, no. 4, 1 October 1990 (1990-10-01) , pages 393-396, XP055056688, ISSN: 0269-283X, DOI: 10.1111/j.1365-2915.1990.tb00456.x
- TULLU BUKHARI ET AL: "Efficacy of Aquatain, a Monomolecular Film, for the Control of Malaria Vectors in Rice Paddies", PLOS ONE, vol. 6, no. 6, 1 January 2011 (2011-01-01) , page e21713, XP055056496, ISSN: 1932-6203, DOI: 10.1371/journal.pone.0021713
- "Larvicidal oil without insecticide", Full specification WHO/SIF/23.R1, 10 December 1999 (1999-12-10), pages 1-12, XP055197206, Retrieved from the Internet: URL:http://www.who.int/whopes/quality/en/L arvicidal_Oil.pdf [retrieved on 2015-06-22]
- "LARVICIDAL OIL WITH ADDED INSECTICIDE", INTERNET CITATION, 10 December 1999 (1999-12-10), pages 1-6, XP003035837, Retrieved from the Internet: URL:http://www.who.int/whopes/quality/en/L arvicidal_Oil.pdf [retrieved on 2015-06-01]
- Aquatain Amf: "Watch Out Mozzies! A NEW GENERATION PRODUCT!", AQUATAIN PRODUCT FLYER, 3 March 2009 (2009-03-03), XP055197209, Retrieved from the Internet: URL:http://www.aquatain.com/upload/Aquatai n AMF Flyer.pdf [retrieved on 2015-06-22]
- "WHAT IS AQUATAIN?", INTERNET CITATION, 3 March 2009 (2009-03-03), pages 1-2, XP003035854, Retrieved from the Internet: URL:HTTPS://WEB.ARCHIVE.ORG/WEB/2009030320 0922/HTTP://AQUATAIN.COM.AU/ [retrieved on 2015-06-01]
- AQUATAIN AMF: "A NEW APPROACH. TOTAL IMPACT MOSQUITO CONTROL", AQUATAIN TOTAL IMPACT,, 1 May 2010 (2010-05-01), pages 1-3, XP003035855,
- AQUATAIN AMF: "LIQUID MOSQUITO DROPS PRODUCT INFORMATION", AQUATAIN TOTAL IMPACT,, 1 January 2010 (2010-01-01), pages 1-2, XP003035856,

## Description

The present invention relates to a method for controlling insects comprising the steps of preparing a tankmix by mixing a larvicide and a liquid adjuvant, wherein the adjuvant is free of the larvicide and contains at least 1 wt% polyorganosiloxane, and at least 20 wt% synthetic organic solvent; and applying the tankmix on a water surface, wherein the organic solvent contains an aliphatic C₅₋₁₂ ketone, wherein the organic solvent contains a C₅₋₁₈ aliphatic hydrocarbon, and wherein the organic solvent contains an ester of an aliphatic C₆₋₂₄ alcohol with aliphatic C₁₋₆ acid; wherein the adjuvant contains at least 5 wt% lactic acid ester, at least 10 wt% aliphatic C₅₋₁₂ ketone, at least 10 wt% C₅₋₁₈ aliphatic hydrocarbon, and at least 10 wt% ester of aliphatic C₆₋₂₄ alcohol with aliphatic C₁₋₆ acid; and wherein the larvicide contains temephos, spinosad, dinetofuran, methopren, Bacillus thuringiensis, Bacillus thuringiensis israelensis, or Bacillus sphaericus. The invention further relates to a liquid adjuvant for preparing a larvicidal tankmix, wherein the adjuvant is free of a larvicide and contains at least 1 wt% polyorganosiloxane, and at least 20 wt% synthetic organic solvent, wherein the organic solvent contains an aliphatic C₅₋₁₂ ketone, wherein the organic solvent contains a C₅₋₁₈ aliphatic hydrocarbon, and wherein the organic solvent contains an ester of an aliphatic C₆₋₂₄ alcohol with aliphatic C₁₋₆ acid; wherein the adjuvant contains at least 5 wt% lactic acid ester, at least 10 wt% aliphatic C₅₋₁₂ ketone, at least 10 wt% C₅₋₁₈ aliphatic hydrocarbon, and at least 10 wt% ester of aliphatic C₆₋₂₄ alcohol with aliphatic C₁₋₆ acid; and wherein the larvicide contains temephos, spinosad, dinetofuran, methopren, Bacillus thuringiensis, Bacillus thuringiensis israelensis, or Bacillus sphaericus. Finally, it relates to a method for preparing said adjuvant, comprising mixing the polyorganosiloxan and the synthetic organic solvent. Combinations of preferred embodiments with other preferred embodiments are within the scope of the present invention.

The control of aquatic insects by silicon polymers is an important tool in public health management.

WO 2008/014566 discloses a composition for the protection of a body of water comprising 5 to 95 wt% silicone polymer, zero to 90 wt% carrier material and greater than zero to 20 wt% surfactant. This composition protects the liquid/gas interface from insect infestations and disrupts the mosquito lifecycle.

WO 2012/104369 discloses a method for controlling insects comprising the application of a liquid composition containing a polyorganosiloxane, a larvicide and an organic solvent.

Perich et al., Med. Vet. Entomol. 1990, 4, 393-396 discloses a field evaluation of four biorational larvicide formulations against *Anopheles albimanus* in Honduras.

Object of the present invention was to overcome the disadvantages of the state of the art.

The object was solved by a method for controlling insects comprising the steps of preparing a tankmix by mixing a larvicide and a liquid adjuvant, wherein the adjuvant is free of the larvicide and contains at least 1 wt% polyorganosiloxane, and at least 20 wt% synthetic organic solvent; and applying the tankmix on a water surface, wherein the organic solvent contains an aliphatic C₅₋₁₂ ketone, wherein the organic solvent contains a C₅₋₁₈ aliphatic hydrocarbon, and wherein the organic solvent contains an ester of an aliphatic C₆₋₂₄ alcohol with aliphatic C₁₋₆ acid; wherein the adjuvant contains at least 5 wt% lactic acid ester, at least 10 wt% aliphatic C₅₋₁₂ ketone, at least 10 wt% C₅₋₁₈ aliphatic hydrocarbon, and at least 10 wt% ester of aliphatic C₆₋₂₄ alcohol with aliphatic C₁₋₆ acid; and wherein the larvicide contains temephos, spinosad, dinetofuran, methopren, Bacillus thuringiensis, Bacillus thuringiensis israelensis, or Bacillus sphaericus. In another embodiment, the method for controlling insects comprises the steps of preparing a tankmix by mixing a larvicide and a liquid adjuvant, wherein the adjuvant consists of at least 1 wt% polyorganosiloxane, at least 20 wt% synthetic organic solvent, and optionally formulation additives; and applying the tankmix on a water surface.

The object was also solved by a liquid adjuvant for preparing a larvicidal tankmix, wherein the adjuvant is free of a larvicide and contains at least 1 wt% polyorganosiloxane, and at least 20 wt% synthetic organic solvent. In another embodiment, the liquid adjuvant for preparing a larvicidal tankmix consists of at least 1 wt% polyorganosiloxane, at least 20 wt% synthetic organic solvent, and wherein the organic solvent contains an aliphatic C₅₋₁₂ ketone, wherein the organic solvent contains a C₅₋₁₈ aliphatic hydrocarbon, and wherein the organic solvent contains an ester of an aliphatic C₆₋₂₄ alcohol with aliphatic C₁₋₆ acid; wherein the adjuvant contains at least 5 wt% lactic acid ester, at least 10 wt% aliphatic C₅₋₁₂ ketone, at least 10 wt% C₅₋₁₈ aliphatic hydrocarbon, and at least 10 wt% ester of aliphatic C₆₋₂₄ alcohol with aliphatic C₁₋₆ acid; and wherein the larvicide contains temephos, spinosad, dinetofuran, methopren, Bacillus thuringiensis, Bacillus thuringiensis israelensis, or Bacillus sphaericus .

**Polyorganosiloxanes** are polymers, in which silicon atoms are linked via oxygen atoms, each silicon atom bearing one or several organic groups. They are also known as silicones and reviewed by Moretto et al., Ullmann's Encyclopedia of Industrial Chemistry, 2000, Keyword "Silicones".

The organo groups of the polyorganosiloxane comprise alkyl, aryl and/or polymeric groups. The polyorganosiloxane may be linear, cyclic (like trisiloxanes), branched or crosslinked. In a first preferred embodiment, the organo groups of the polyorganosiloxane comprise (preferably consist of) alkyl, and/or aryl groups. In a second preferred embodiment, the organo groups of the polyorganosiloxane comprise polymeric groups in addition to alkyl and/or aryl groups.

Examples of alkyl groups are C₁-C₁₂ alkyl, preferably methyl. Examples of aryl groups are phenyl or substituted phenyl groups, preferably phenyl. In particular, the polyorganosiloxane comprises polydimethylsiloxane (also known as dimethicone). The chemical composition of polydimethylsiloxane is generally represented by the formula (CH₃)₃SiO[SiO(CH₃)₂]ₙSi(CH₃)₃. The n has usually a value of at least 3, preferably at least 5. The value of n may be up to 5000, preferably up to 2000. Polydimethylsiloxanes are commercially available, e.g. from Dow Corning as Xiameter® PMX-200.

Preferred polymeric groups are polyether. Such compounds are also known as polyorganosiloxane-polyether. Typically, the polyether contains poly(ethylene oxide), poly(propylene oxide), or poly(ethylene oxide - co - propylene oxide), wherein the latter may be a statistical or block copolymer of the alkylene oxides. The polyorganosiloxane-polyether may be present as linear, branched or comb type polymers. The polymers may have a Si-O-C as well as Si-C linkages between the polysiloxane and the polyether segment. Examples of polyorganosiloxane-polyether are known from Moretto et al., Ullmann's Encyclopedia of Industrial Chemistry, 2000, Keyword "Silicones", chapter 6.1, especially in Table 9. Polyorganosiloxane-polyethers are commercially available, e.g. the Dow Corning® types Q4-3667 (ABA block polymer), 5103 Surfactant (graft polymer), Q2-5211 Superwetting Agent (trisiloxane), or from Evonik Break-thru® S 240 (trisiloxane), or Break-thru® OE (graft polymer).

The viscosity of the polyorganosiloxane may vary from 10 to 50.000 cSt, preferably from 40 to 15.000 cSt.

**Mixtures of polyorganosiloxanes** may be used or a single type of polyorganosiloxane. Preferably, at least two different polyorganosiloxanes are used. Preferred mixtures comprise a polydimethylsiloxane and a polyorganosiloxane-polyether. Usually, the ratio of polydimethylsiloxane to polyorganosiloxane-polyether is in the range from 50 to 1 to 1 to 10, preferably from 10 to 1 to 1 to 2, and in partucular from 5 to 1 to 2 to 1.

Most preferably, the polyorganosiloxane contains (in particular consists of) a polyorganosiloxane-polyether.

The adjuvant may contain from 1 to 50 wt% polyorganosiloxanes in total. Preferably, it contains from 5 to 30 wt% polyorganosiloxanes in total, in particular from 10 to 20 wt%.

**Larvicides** are typically insecticides which kill larvae, for example mosquito larvae. Repellents are usually not considered larvicides. Repellents may repel insects, but do not directly harm the body of the insect. Examples are synthetic larvicides (such as temephos, dinetofuran, diflubenzuron, spinosad or methopren) and microbial larvicides (such as Bacillus thuringiensis, Bacillus thuringiensis israelensis, Bacillus sphaericus). Larvicides are commercially available, such as under the brand names Altosid® (methoprene), Abate® (temephos), GF-120 NF Naturalyte® Fruit Fly Bait (mixture of spinosad A & D), Aquabac® (Bacillus thuringiensis israelensis), or Fourstar® (Bacillus sphaericus). The larvicide contains temephos, spinozad, dinetofuran, methopren, Bacillus thuringiensis, Bacillus thuringiensis israelensis, or Bacillus sphaericus.

Preferably, the larvicide is a synthetic larvicide, such as temephos, dinetofuran, diflubenzuron or methopren. In particular, the larvicide is temephos.

The adjuvant is **free of a larvicide.**

The weight **ratio of larvicide** / **polyorganosiloxane** in the tankmix may be from 50 / to 1 / 50, preferably from 7 / 1 to 1 / 7, and in particular from 2.5 /1 to 1 / 2.5.

The adjuvant is a **liquid** composition (typically at 20 °C), such as a solution, emulsion, suspension or suspoemulsion. Preferably the liquid is a solution or emulsion, in particular a solution.

The adjuvant may contain **water.** Usually, it contains up to 10 wt% water, preferably up to 5 wt%, and in particular up to 1 wt%. It is also possible that the adjuvant is free of water.

The adjuvant may contain an **synthetic organic solvent.** Synthetic organic solvents may be synthetized by human-controlled chemical synthesis. Mineral or vegetable oils are usually not considered synthetic organic solvents.

Preferred organic solvents are **water-immiscible** organic solvents, such as organic solvents which have a solubility in water at 20 °C of up 10 wt%, preferably up to 4 wt%, more preferably up to 2 wt%, even more preferably up to 1,5 wt%. In case the organic solvent comprises a mixture of organic solvents, typically at least 50 wt%, preferably at least 60 wt%, and in particular at least 70 wt% (based on the total amount of organic solvents) are water-immiscible organic solvents.

The organic solvent may comprise a water-immiscible organic solvents and a water-miscible organic solvent (e.g. having a solubility in water at 20 °C of at least 10 wt%). Preferred water-miscible organic solvent is dimethyl sulfoxide. The adjuvant may contain up to 50 wt%, preferably up to 30wt % water-miscible organic solvent.

Suitable organic solvents are ketones, esters, ether, or C₅₋₁₈ aliphatic hydrocarbons, wherein are ketones, esters, or C₅₋₁₈ aliphatic hydrocarbons are preferred. Mixtures of aforementioned solvents are also possible.

The organic solvent contains an aliphatic C₅₋₁₈ ketones, preferably C₆₋₁₂ ketones, and in particular 2-heptanone.

The organic solvent contains a lactic acid ester (preferably lactic acid ester of aliphatic C₁₋₁₈ alcohols, more preferably lactic acid ester of aliphatic C₄₋₁₂ alcohols, in particular 2-ethylhexyl lactate).

The organic solvent contains an ester of an aliphatic C₉₋₂₄ alcohols with aliphatic C₁₋₆ acids (preferably esters of aliphatic C₇₋₂₀ alcohols with aliphatic C₂₋₈ acids , and in particular isobornyl acetate).

Suitable **ethers** are di-C₁₋₃₆ ethers, such as di-n-hexyl ether, di-n-octyl ether, di-n-decyl ether, or di-n-lauryl ether. The organic solvent contains an C₅₋₁₈ aliphatic hydrocarbons, wherein preferred aliphatic **hydrocarbons** are C₆₋₁₈ aliphatic hydrocarbons, more preferred C₇₋₁₄ aliphatic hydrocarbons, in particular 1-methyl-4-isopropenyl-1-cyclohexen ((*R*)- and/or ((*S*)-isomers). The aliphatic hydrocarbons may be saturated or unsaturated, cyclic, branched or linear.

The adjuvant may contain up to 99,5 wt% of the organic solvent, preferably up to 99 wt%. Typically, the adjuvant contains at least 30 wt% of the organic solvent, preferably at least 50 wt%, more preferably at least 70 wt%, and in particular at least 80 wt%.

The adjuvant may contain 5 - 20 wt% lactic acid ester. The adjuvant may contain 15 - 50 wt%, and in particular 20 - 40 wt% aliphatic C₅₋₁₂ ketone. The adjuvant may contain 15 - 50 wt%, and in particular 20 - 40 wt% C₅₋₁₈ aliphatic hydrocarbon. The adjuvant may contain 15 - 50 wt%, and in particular 20 - 40 wt% ester of aliphatic C₆₋₂₄ alcohol with aliphatic C₁₋₆ acid.

The adjuvant contains at least 5 wt% lactic acid ester, at least 10 wt% aliphatic C₅₋₁₂ ketone, at least 10 wt% C₅₋₁₈ aliphatic hydrocarbon, and at least 10 wt% ester of aliphatic C₆₋₂₄ alcohol with aliphatic C₁₋₆ acid. Preferably, the adjuvant may contain at least 5 wt% lactic acid ester, at least 15 wt% aliphatic C₅₋₁₂ ketone, at least 15 wt% C₅₋₁₈ aliphatic hydrocarbon, and at least 15 wt% ester of aliphatic C₆₋₂₄ alcohol with aliphatic C₁₋₆ acid.

The adjuvant may comprise further common formulation **additives,** such as surfactants, UV-absorbers, thickeners, mineral or vegetable oil, essential oil or bactericides. Typically, the larvicides are not considered as formulation additives. Preferred additives are surfactants, especially non-ionic surfactants, such as alkoxylates. In another preferred form the adjuvant is essentially free (i.e. up to 5 wt%, preferably up to 1 wt%) of additives, especially free of non-ionic surfactants, such as alkoxylates.

The adjuvant may contain **mineral or vegetable oil** in addition to the synthetic organic solvent. Examples of mineral oil are oils based on petroleum distillates, such as aromatic and/or aliphatic hydrocarbon fractions. Examples of vegetable oil is oil from sunflower, canola, rapeseed, palm, soybean, peanut, cottonseed, palm cernel, coconut, or olive. The adjuvant may contain up to 15 wt% mineral or vegetable oil, preferably up to 5 wt%, more preferred up to 1 wt% and in particular up to 0.1 wt%. It is also possible that the adjuvant is free of mineral or vegetable oil. The adjuvant may contain an **essential oil.** Suitable essential oils may be essential oils which are repellents to mosquitos. Examples of essential oils are citronella oil, eucalyptus oil, cinnamon oil, rosemary oil, lemongrass oil, cedar oil, peppermint oil, clove oil, and geranium oil. Preferred essential oil is eucalyptus oil.

The adjuvant may contain up to 50 wt% essential oil, preferably up to 20 wt% and in particular up to 3 wt%. The adjuvant may contain at least 0.01 wt% essential oil, preferably at least 0.1 wt% and in particular at least 1 wt%. In a further embodiment, the adjuvant is free of essential oil.

**Surfactants** which are particularly suitable are anionic, cationic, nonionic and amphoteric surfactants, block polymers and polyelectrolytes. Preferred surfactants are non-ionic surfactants, such as alkoxylates. Any polyorganosiloxanes are not considered as surfactant in the present invention.

Suitable **anionic** surfactants are alkali, alkaline earth or ammonium salts of sulfonates, sulfates, phosphates or carboxylates. Examples of sulfonates are alkylarylsulfonates, diphenylsulfonates, alpha-olefin sulfonates, sulfonates of fatty acids and oils, sulfonates of ethoxylated alkylphenols, sulfonates of condensed naphthalenes, sulfonates of dodecyl- and tridecylbenzenes, sulfonates of naphthalenes and alkylnaphthalenes, sulfosuccinates or sulfosuccinamates. Examples of sulfates are sulfates of fatty acids and oils, of ethoxylated alkylphenols, of alcohols, of ethoxylated alcohols, or of fatty acid esters. Examples of phosphates are phosphate esters. Examples of carboxylates are alkyl carboxylates and carboxylated alcohol or alkylphenol ethoxylates.

Suitable **nonionic** surfactants are alkoxylates, N-alkylated fatty acid amides, amine oxides, esters or sugar-based surfactants. Examples of alkoxylates are compounds such as alcohols, alkylphenols, amines (e.g. tallow amine), amides, arylphenols, fatty acids or fatty acid esters which have been alkoxylated. Ethylene oxide and/or propylene oxide may be employed for the alkoxylation, preferably ethylene oxide. Examples of N-alkylated fatty acid amides are fatty acid glucamides or fatty acid alkanolamides. Examples of esters are fatty acid esters, glycerol esters or monoglycerides. Examples of sugar-based surfactants are sorbitans, ethoxylated sorbitans, sucrose and glucose esters or alkylpolyglucosides.

Preferred alkoxylates are ethoxylates of C₁₄₋₂₂ aliphatic alcohols. The alkoxylate preferably contain from 1 to 10, preferably from 1 to 4 equivalents of ethylenoxide. The HLB value according to Griffin is preferably from 3 to 15, more preferably from 3 to 10, and in particular from 3,5 to 6. Typically, the alkoxylates have a solubility in water at 20 °C of up to 5 wt%, preferably up to 2,5 wt%, and in particular of up to 1 wt%.

Examples of suitable **cationic** surfactants are quaternary surfactants, for example quaternary ammonium compounds with one or two hydrophobic groups, or salts of long-chain primary amines. Suitable **amphoteric** surfactants are alkylbetains and imidazolines. Suitable **block polymers** are block polymers of the A-B or A-B-A type comprising blocks of polyethylene oxide and polypropylene oxide or of the A-B-C type comprising alkanol, polyethylene oxide and polypropylene oxide. Suitable **polyelectrolytes** are polyacids or polybases. Examples of polyacids are alkali salts of polyacrylic acid. Examples of polybases are polyvinylamines or polyethyleneamines.

Usually, the adjuvant contains up to 30 wt% surfactant (e.g. an alkoxylate), preferably up to 20 wt%, and in particular up to 15 wt%. In another form, the adjuvant contains at least 1 wt% surfactant (e.g. an alkoxylate), preferably at least 3 wt%, and in particular at least 5 wt%. Is it also possible that the adjuvant is free of surfactants.

The adjuvant may contain inert fillers, such as inorganic inert fillers. However, it is advantageous that the adjuvant is contains only up to 3 wt% inert fillers, preferably up to 0.5 wt% and in particular up to 0.1 wt%. It is especially preferred that the adjuvant is free of inert fillers. Examples of inert fillers are calcium carbonate, talc, fine coal particulates, fly ash or cenospheres. The particle size of these inert fillers may be between 2 and 50 µm.

Typically, the adjuvant according to the invention contains from 1 to 25 wt% polyorganosiloxane, from 30 to 99 wt% organic solvent, and optionally up to 100 % formulation additives.

Preferably, the adjuvant according to the invention contains from 2 to 18 wt% polyorganosiloxane, from 45 to 98 wt% organic solvent, and optionally up to 100 % formulation additives.

The sum of all components, which are present in the adjuvant according to the invention sum up to 100 wt%.

Typically, the insects are **aquatic insects.** Aquatic insects are those that spend some part of their life-cycle closely associated with water, either living beneath the surface or skimming along on top of the water. Aquatic insects can be found in the following taxonomic orders:
- Collembola, the Springtails;
- Ephemeroptera, the Mayflies;
- Odonata, the Dragonflies;
- Plecoptera, the Stoneflies;
- Hemiptera, the true Bugs;
- Neuroptera/Megaloptera, the Dobsonflies, Alderflies, and Spongillaflies;
- Trichoptera, the Caddisflies;
- Lepidoptera, the butterflies and Moths;
- Coleoptera, the Beetles;
- Diptera, the true Flies.

Preferably, the insects are mosquitos, black flies, Aedes spp. (e.g. Ae. albopictus, aegypti, taeniorhynchus), Culex spp., Anopheles spp., Simuliidae ssp., or Culicoides spp..

Suitable examples of Culicidae ssp. are:
*Aedes aegypti, Aedes africanus, Aedes albifasciatus, Aedes albopictus, Aedes angustivittatus, Aedes bromeliae, Aedes Canadensis, Aedes cooki, Aedes dorsalis, Aedes fijiensis, Aedes furci-fer, Aedes harinasutai, Aedes infirmatus, Aedes japonicus, Aedes kochi, Aedes luteocephalus, Aedes mcintoshi, Aedes melanimon, Aedes niveus cpx., Aedes normanensis, Aedes oceanicus, Aedes poicilius, Aedes polynesiensis, Aedes samoanus, Aedes scapularis, Aedes scutellaris, Aedes stokesi, Aedes taeniorhynchus, Aedes taylori, Aedes togoi, Aedes triseriatus, Aedes trivittatus, Aedes tutuilae, Aedes upolensis, Aedes vexans, Aedes vigilax, Anopheles aconitus, Anopheles albimanus, Anopheles albitarsis, Anopheles annularis, Anopheles annulipes s.l., Anopheles aquasalis, Anopheles arabiensis, Anopheles argyritarsis, Anopheles atroparvus, Anopheles aztecus, Anopheles bancroftii, Anopheles barbirostris, Anopheles bellator, Anopheles benarrochi, Anopheles braziliensis, Anopheles calderoni, Anopheles campestris, Anopheles claviger, Anopheles crucians, Anopheles cruzil, Anopheles culicifacies s.l., Anopheles darlingi, Anopheles donaldi, Anopheles farauti s.l., Anopheles flavirostris, Anopheles fluviatilis, Anopheles freeborni, Anapheles funestus, Anopheles gambiae, Anopheles gambiae complex, Anopheles hancocki, Anopheles jeyporiensis, Anopheles karwari, Anopheles koliensis, Anopheles labranchiae, Anopheles lepidotus, Anopheles lesteri, Anopheles letifer, Anopheles leucosphyrus group (baimaii, balabacensis, dirus, lateens, leucosphyrus, sulawesi)*, *Anopheles ludlowea, Anopheles maculates s.l., Anopheles maculipennis, Anopheles marajoara, Anopheles melas, Anopheles merus, Anopheles messeae, , Anopheles minimus, Anopheles moucheti, Anopheles multicolor, Anopheles neivai, Anopheles nigerrimus, Anopheles nili s.l., Anopheles nuneztovari s.l., Anopheles oswaldoi, Anopheles pattoni, Anopheles pharoensis s.l., Anopheles philippinen-sis, Anopheles pseudopunctipennis, Anopheles pulcherrimus, Anopheles punctimacula , Anopheles punctipennis, Anopheles punctulatus, Anopheles sacharovi, Anopheles sergentii, Anopheles sinensis, Anopheles stephensi, Anopheles subpictus s.l., Anopheles sundaicus s.l., Anopheles superpictus, Anopheles tessellatus, Anopheles triannulatus, Anopheles quadrimacu-latus, Anopheles vagus, Anopheles walkeri, Anopheles wellcomei*, *Anopheles whartoni, Armigeres subalbatus, Coquillettidia crassipes, Coquillettidia fuscopennata, Coquillettidia per-turbans, Coquillettidia venezuelensis*, *Culex annulirostris, Culex antennatus, Culex bi-taeniorhynchus, Culex erythrothorax, Culex gelidus, Culex pipiens, Culex nigripalpus, Culex ocossa, Culex portesi, Culex quinquefasciatus*, *Culex restuans, Culex sitiens, Culex spissipes, Culex taeniopus, Culex tarsalis, Culex theileri, Culex tritaeniorhynchus, Culex univittatus, Culex vishnui complex, Culex vomerifer, Culicoides furens, Culiseta inornata, Culiseta melanura, Culiseta morsitans, Haemagogus leucocelaenus, Haemagogus janthinomys, Haemagogus spegazzinii, Mansonia annulata, Mansonia bonneae, Mansonia dives, Mansonia Indiana, Mansonia titillans, Mansonia uniformis, Psorophora columbiae, Psorophora discolor*, *Psorophora ferox, Sabethes chloropterus, Trichoprosopon digitatum*

Suitable examples of *Simuliidae ssp.* are:
*Eusimilium spp., Prosimulium mixtum, Simulium arcticum, Similium callidum, Similium colum-baczense, Similium damnosum, Similium erythrocephalum, Similium indicum, Similium jen-ningsi, Similium metallicum, Similium neavei, Similium ochraceum, Similium ornatum, Similium pecuarum, Similium rugglesi, Similium venustum, Simulium vittatum*

The insects may be present at any growth stage, such as eggs, egg rafts, larval instars, pupae, or adults.

The **water surface** may be for example the surface of a lake, river, sea, swamp, rice field, roadside ditch, swimming pool, pond, salt marsh, or water barrel.

The adjuvant may be applied with **dose rate** of 0.01 to 30 l/ha, preferably 0.1 to 10 l/ha, and in particular 0.3 to 5 l/ha.

A tankmix usually is a composition, which is ready to apply on the water surface. The tankmix may be liquid at 20 °C. Typically, the tankmix is a sprayable liquid. The tankmix may be an aqueous liquid or water-free liquid. The tankmix may be applied with conventional means, such as spraying. It may be applied by aerial spraying or from the ground.

In another form, the method for controlling insects comprises the **steps** of preparing a tankmix by mixing the larvicide, the liquid adjuvant and optionally water. Preferably, first the larvicide and the adjuvant are mixed, optionally followed by mixing water with the mixture containing the larvicide and the adjuvant.

The larvicide may be present as **agrochemical composition** or a pure active ingredient. An agrochemical composition comprises a pesticidally effective amount of the larvicide. The term "effective amount" denotes an amount of the larvicide, which is sufficient for controlling larvae. The agrochemical composition may contain from 0,1 to 99,9 wt% larvicide.

The larvicide can be converted into customary types of agrochemical compositions, e. g. solutions, emulsions, suspensions, dusts, powders, pastes, granules, pressings, capsules, and mixtures thereof. Examples for composition types are suspensions (e.g. SC, OD, FS), emulsifiable concentrates (e.g. EC), emulsions (e.g. EW, EO, ES, ME), capsules (e.g. CS, ZC), pastes, pastilles, wettable powders or dusts (e.g. WP, SP, WS, DP, DS), pressings (e.g. BR, TB, DT), granules (e.g. WG, SG, GR, FG, GG, MG), insecticidal articles (e.g. LN), as well as gel formulations for the treatment of plant propagation materials such as seeds (e.g. GF). These and further compositions types are defined in the "Catalogue of pesticide formulation types and international coding system", Technical Monograph No. 2, 6th Ed. May 2008, CropLife International. Solid agrochemical compositions containing the larvicide are usually mixed with water and the adjuvant. Liquid agrochemical compositions containing the larvicide are usually mixed with the adjuvant and optionally with water.

The present invention further relates to a liquid **adjuvant** for preparing a larvicidal tankmix, wherein the adjuvant is free of a larvicide and contains at least 1 wt% polyorganosiloxane, and at least 20 wt% synthetic organic solvent, wherein the organic solvent contains an aliphatic C₅₋₁₂ ketone, wherein the organic solvent contains a C₅₋₁₈ aliphatic hydrocarbon, and wherein the organic solvent contains an ester of an aliphatic C₆₋₂₄ alcohol with aliphatic C₁₋₆ acid; wherein the adjuvant contains at least 5 wt% lactic acid ester, at least 10 wt% aliphatic C₅₋₁₂ ketone, at least 10 wt% C₅₋₁₈ aliphatic hydrocarbon, and at least 10 wt% ester of aliphatic C₆₋₂₄ alcohol with aliphatic C₁₋₆ acid; and wherein the larvicide contains temephos, spinosad, dinetofuran, methopren, Bacillus thuringiensis, Bacillus thuringiensis israelensis, or Bacillus sphaericus. In another embodiment, the liquid adjuvant for preparing a larvicidal tankmix consists of at least 1 wt% polyorganosiloxane, at least 20 wt% synthetic organic solvent, and optionally formulation additives. The adjuvant is especially useful for the method according to the invention. A larvicidal tankmix is usually a tankmix which contains a larvicide.

The present invention further relates to a method for preparing the adjuvant according to the present invention, comprising mixing the polyorganosiloxan and the synthetic organic solvent.

The present invention offers various **advantages:** The adjuvant may be easily mixed with various larvicides. The tankmix is easily sprayable. The solvents have no or very low toxicity, such as aquatoxicity. The dose rate of the larvicide may be reduced. The dose rate of the polysiloxane may be reduced. The application is very easy and it is very efficient. The larvicide spreads easily and fast over a water surface. There is a dual mode of action on developing larvae, namely the direct kill and the inhibition of the pupal eclosion. The efficiency is prolonged compared to either the larvicide or the polyorganosiloxane alone. The adjuvant is storage stable.

The invention is further illustrated but not limited by the following examples.

### Examples

Silicone A: alkoxylated Polydimethylsiloxan (also known as Polydimethylsiloxan-polyether), soluble in water (room temperature, 10 wt%), dynamic Viscosity 2000-3500 mPas (25 °C).
Alkoxylate A: nonionic ethoxylated alcohol, molecular mass below 600 g/mol, liquid at 20 °C, solubility in water at 20 °C below 0.5 wt%.

### Examples 1-2: Preparation of adjuvants

The liquid adjuvants were prepared by mixing the components as listed in Table 1.

**Table 1: Amounts of components [g]**

| Component | Example 1 | Example 2 |
|---|---|---|
| Silicone A | 6 | 6 |
| Alkoxylate A | 10 | - |
| D-(+)-1-Methyl-4-isopropenyl-1-cyclohexen | 25 | 27 |
| 2-Heptanone | 25 | 27 |
| Isobornyl acetate | 25 | 27 |
| 2-Ethylhexyl lactate | 10 | 12 |

## Claims

1. A method for controlling insects comprising the steps of
preparing a tankmix by mixing a larvicide and a liquid adjuvant, wherein the adjuvant is free of the larvicide and contains
- at least 1 wt% polyorganosiloxane,
- at least 20 wt% synthetic organic solvent; and
applying the tankmix on a water surface,
wherein the organic solvent contains an aliphatic C₅₋₁₂ ketone,
wherein the organic solvent contains a C₅₋₁₈ aliphatic hydrocarbon, and
wherein the organic solvent contains an ester of an aliphatic C₆₋₂₄ alcohol with aliphatic C₁₋₆ acid;
wherein the adjuvant contains at least 5 wt% lactic acid ester, at least 10 wt% aliphatic C₅₋₁₂ ketone, at least 10 wt% C₅₋₁₈ aliphatic hydrocarbon, and at least 10 wt% ester of aliphatic C₆₋₂₄ alcohol with aliphatic C₁₋₆ acid; and
wherein the larvicide contains temephos, spinosad, dinetofuran, methopren, Bacillus thuringiensis, Bacillus thuringiensis israelensis, or Bacillus sphaericus.

2. The method according to claim 1, wherein the insects are aquatic insects.

3. The method according to claim 1 or 2, wherein the water surface is that of a lake, river, sea, swamp, rice field, roadside ditch, swimming pool, salt marsh, or water barrel.

4. The method according to any of claims 1 to 3, wherein the polyorganosiloxane comprises polyorganosiloxane-polyether.

5. The method according to any of claims 1 to 4, wherein the insects are mosquitos, black flies, *Aedes* spp., *Culex* spp.*, Anopheles* spp., *Simuliidae* ssp., or *Culicoides* spp..

6. The method according to any of claims 1 to 5, wherein the adjuvant contains
- from 1 to 25 wt% polyorganosiloxane, and
- from 30 to 99 wt% organic solvent.

7. The method according to any of claims 1 to 6, wherein the larvicide contains temephos.

8. The method according to any of claims 1 to 7, wherein the adjuvant contains up to 10 wt% water.

9. A liquid adjuvant for preparing a larvicidal tankmix, wherein the adjuvant is free of a larvicide and contains
- at least 1 wt% polyorganosiloxane, and
- at least 20 wt% synthetic organic solvent,
wherein the organic solvent contains an aliphatic C₅₋₁₂ ketone,
wherein the organic solvent contains a C₅₋₁₈ aliphatic hydrocarbon, and
wherein the organic solvent contains an ester of an aliphatic C₆₋₂₄ alcohol with aliphatic C₁₋₆ acid;
wherein the adjuvant contains at least 5 wt% lactic acid ester, at least 10 wt% aliphatic C₅₋₁₂ ketone, at least 10 wt% C₅₋₁₈ aliphatic hydrocarbon, and at least 10 wt% ester of aliphatic C₆₋₂₄ alcohol with aliphatic C₁₋₆ acid; and
wherein the larvicide contains temephos, spinosad, dinetofuran, methopren, Bacillus thuringiensis, Bacillus thuringiensis israelensis, or Bacillus sphaericus.

10. The adjuvant according to claim 9, comprising
- from 1 to 25 wt% polyorganosiloxane, and
- from 30 to 99 wt% organic solvent.

11. The adjuvant according to claims 9 or 10, wherein the polysiloxane comprises a polyorganosiloxane-polyether.

12. The adjuvant according to any of claims 9 to 11 containing up to 10 wt% water.

13. A method for preparing the adjuvant as defined in any of claims 1 to 12, comprising mixing the polyorganosiloxane and the synthetic organic solvent.

## Patentansprüche

1. Verfahren zum Bekämpfen von Insekten, umfassend die folgenden Schritte:
Herstellen einer Tankmischung durch Mischen eines Larvizids und eines flüssigen Adjuvans, wobei das Adjuvans frei von dem Larvizid ist und
- mindestens 1 Gew.-% Polyorganosiloxan,
- mindestens 20 Gew.-% synthetisches organisches Lösungsmittel
enthält; und
Applizieren der Tankmischung auf eine Wasseroberfläche,
wobei das organische Lösungsmittel ein aliphatisches C₅₋₁₂-Keton enthält,
wobei das organische Lösungsmittel einen aliphatischen C₅₋₁₈-Kohlenwasserstoff enthält und
wobei das organische Lösungsmittel einen Ester eines aliphatischen C₆₋₂₄-Alkohols mit einer aliphatischen C₁₋₆-Säure enthält;
wobei das Adjuvans mindestens 5 Gew.-% Milchsäureester, mindestens 10 Gew.-% aliphatisches C₅₋₁₂-Keton, mindestens 10 Gew.-% aliphatischen C₅₋₁₈-Kohlenwasserstoff und mindestens 10 Gew.-% Ester eines aliphatischen C₆₋₂₄-Alkohols mit einer aliphatischen C₁₋₆-Säure enthält; und
wobei das Larvizid Temephos, Spinosad, Dinetofuran, Methopren, Bacillus thuringiensis, Bacillus thuringiensis israelensis oder Bacillus sphaericus enthält.

2. Verfahren nach Anspruch 1, wobei es sich bei den Insekten um aquatische Insekten handelt.

3. Verfahren nach Anspruch 1 oder 2, wobei es sich bei der Wasseroberfläche um die Oberfläche eines Sees, eines Flusses, eines Meeres, eines Sumpfes, eines Reisfelds, eines Straßengrabens, eines Schwimmbeckens, einer Salzmarsch oder einer Wassertonne handelt.

4. Verfahren nach einem der Ansprüche 1 bis 3, wobei das Polyorganosiloxan Polyorganosiloxan-Polyether umfasst.

5. Verfahren nach einem der Ansprüche 1 bis 4, wobei es sich bei den Insekten um Moskitos, Kriebelmücken, *Aedes* spp., *Culex* spp., *Anopheles* spp., *Simuliidae* spp. oder *Culicoides* spp. handelt.

6. Verfahren nach einem der Ansprüche 1 bis 5, wobei das Adjuvans
- 1 bis 25 Gew.-% Polyorganosiloxan und
- 30 bis 99 Gew.-% organisches Lösungsmittel enthält.

7. Verfahren nach einem der Ansprüche 1 bis 6, wobei das Larvizid Temephos enthält.

8. Verfahren nach einem der Ansprüche 1 bis 7, wobei das Adjuvans bis zu 10 Gew.-% Wasser enthält.

9. Flüssiges Adjuvans zur Herstellung einer larviziden Tankmischung, wobei das Adjuvans frei von einem Larvizid ist und
- mindestens 1 Gew.-% Polyorganosiloxan,
- mindestens 20 Gew.-% synthetisches organisches Lösungsmittel
enthält;
wobei das organische Lösungsmittel ein aliphatisches C₅₋₁₂-Keton enthält,
wobei das organische Lösungsmittel einen aliphatischen C₅₋₁₈-Kohlenwasserstoff enthält und wobei das organische Lösungsmittel einen Ester eines aliphatischen C₆₋₂₄-Alkohols mit einer aliphatischen C₁₋₆-Säure enthält;
wobei das Adjuvans mindestens 5 Gew.-% Milchsäureester, mindestens 10 Gew.-% aliphatisches C₅₋₁₂-Keton, mindestens 10 Gew.-% aliphatischen C₅₋₁₈-Kohlenwasserstoff und mindestens 10 Gew.-% Ester eines aliphatischen C₆₋₂₄-Alkohols mit einer aliphatischen C₁₋₆-Säure enthält; und wobei das Larvizid Temephos, Spinosad, Dinetofuran, Methopren, Bacillus thuringiensis, Bacillus thuringiensis israelensis oder Bacillus sphaericus enthält.

10. Adjuvans nach Anspruch 9, umfassend
- 1 bis 25 Gew.-% Polyorganosiloxan und
- 30 bis 99 Gew.-% organisches Lösungsmittel.

11. Adjuvans nach den Ansprüchen 9 oder 10, wobei das Polysiloxan einen Polyorganosiloxan-Polyether umfasst.

12. Adjuvans nach einem der Ansprüche 9 bis 11, das bis zu 10 Gew.-% Wasser enthält.

13. Verfahren zur Herstellung des Adjuvans wie in einem der Ansprüche 1 bis 12 definiert, bei dem man das Polyorganosiloxan und das synthetische organische Lösungsmittel vermischt.

## Revendications

1. Méthode de contrôle d'insectes, comprenant les étapes consistant à :
préparer un mélange pour cuve par le mélange d'un larvicide et d'un adjuvant liquide, où l'adjuvant est dépourvu du larvicide et contient
- au moins 1% en poids de polyorganosiloxane,
- au moins 20% en poids d'un solvant organique synthétique ; et
appliquer le mélange pour cuve sur une surface d'eau,
où le solvant organique contient une cétone aliphatique en C₅₋₁₂,
où le solvant organique contient un hydrocarbure aliphatique en C₅₋₁₈, et
où le solvant organique contient un ester d'un alcool aliphatique en C₆₋₂₄ avec un acide aliphatique en C₁₋₆ ;
où l'adjuvant contient au moins 5% en poids d'un ester d'acide lactique, au moins 10% en poids d'une cétone aliphatique en C₅₋₁₂, au moins 10% en poids d'un hydrocarbure aliphatique en C₅₋₁₈, et au moins 10% en poids d'un ester d'un alcool aliphatique en C₆₋₂₄ avec un acide aliphatique en C₁₋₆ ; et
où le larvicide contient du téméphos, du spinosad, du dinotéfuran, du méthoprène, *Bacillus thuringiensis, Bacillus thuringiensis israelensis,* ou *Bacillus sphaericus.*

2. Méthode selon la revendication 1, dans laquelle les insectes sont des insectes aquatiques.

3. Méthode selon la revendication 1 ou 2, dans laquelle la surface d'eau est celle d'un lac, d'une rivière, d'une mer, d'un marécage, d'un champ de riz, d'un fossé de bord de route, d'une piscine, d'un marais salant, ou d'un baril d'eau.

4. Méthode selon l'une quelconque des revendications 1 à 3, dans laquelle le polyorganosiloxane comprend un polyorganosiloxane-polyéther.

5. Méthode selon l'une quelconque des revendications 1 à 4, dans laquelle les insectes sont les moustiques, les simulies, *Aedes* spp., *Culex* spp., *Anopheles* spp., *Simuliidae* ssp. ou *Culicoides* spp.

6. Méthode selon l'une quelconque des revendications 1 à 5, dans laquelle l'adjuvant contient
- de 1 à 25% en poids de polyorganosiloxane, et
- de 30 à 99% en poids d'un solvant organique.

7. Méthode selon l'une quelconque des revendications 1 à 6, dans laquelle le larvicide contient du téméphos.

8. Méthode selon l'une quelconque des revendications 1 à 7, dans laquelle l'adjuvant contient jusqu'à 10% en poids d'eau.

9. Adjuvant liquide destiné à la préparation d'un mélange pour cuve larvicide, où l'adjuvant est dépourvu du larvicide et contient
- au moins 1% en poids de polyorganosiloxane, et
- au moins 20% en poids d'un solvant organique synthétique ;
où le solvant organique contient une cétone aliphatique en C₅₋₁₂,
où le solvant organique contient un hydrocarbure aliphatique en C₅₋₁₈, et
où le solvant organique contient un ester d'un alcool aliphatique en C₆₋₂₄ avec un acide aliphatique en C₁₋₆ ; où l'adjuvant contient au moins 5% en poids d'un ester d'acide lactique, au moins 10% en poids d'une cétone aliphatique en C₅₋₁₂, au moins 10% en poids d'un hydrocarbure aliphatique en C₅₋₁₈, et au moins 10% en poids d'un ester d'un alcool aliphatique en C₆₋₂₄ avec un acide aliphatique en C₁₋₆ ; et
où le larvicide contient du téméphos, du spinosad, du dinotéfuran, du méthoprène, *Bacillus thuringiensis, Bacillus thuringiensis israelensis,* ou *Bacillus sphaericus.*

10. Adjuvant selon la revendication 9, comprenant
- de 1 à 25% en poids de polyorganosiloxane, et
- de 30 à 99% en poids d'un solvant organique.

11. Adjuvant selon les revendications 9 ou 10, où le polyorganosiloxane comprend un polyorganosiloxane-polyéther.

12. Adjuvant selon l'une quelconque des revendications 9 à 11, contenant jusqu'à 10% en poids d'eau.

13. Méthode de préparation de l'adjuvant tel que défini selon l'une quelconque des revendications 1 à 12, comprenant le mélange du polyorganosiloxane et du solvant organique synthétique.
